Europäisches Patentamt

European Patent Office

Office européen des brevets

(11) Numéro de publication: **0 317 504 B1**

# FASCICULE DE BREVET EUROPEEN

(45) Date de publication de fascicule du brevet: **28.10.92** (51) Int. Cl.⁵: **A24C 5/39**, B65G 53/42, B65G 53/66

(21) Numéro de dépôt: **88810749.7**

(22) Date de dépôt: **03.11.88**

(54) **Installation pour l'alimentation en tabac d'une ou plusieurs machines à fabriquer notamment des cigarettes.**

(30) Priorité: **16.11.87 CH 4450/87**

(43) Date de publication de la demande:
**24.05.89 Bulletin  89/21**

(45) Mention de la délivrance du brevet:
**28.10.92 Bulletin  92/44**

(84) Etats contractants désignés:
**BE CH DE FR GB IT LI NL**

(56) Documents cités:
**FR-A- 1 602 822       FR-A- 1 603 485**
**FR-A- 2 451 170       FR-A- 2 498 898**
**FR-A- 2 519 517       GB-A- 2 139 870**

(73) Titulaire: **FABRIOUES DE TABAC REUNIES
S.A.
Ouai Jeanrenaud 3 P.O. Box 11
CH-2003 Neuchâtel-Serrières(CH)**

(72) Inventeur: **Lauenstein, Michael
Route des Niclaudes 1
CH-2036 Cormondrèche(CH)**
Inventeur: **Tallier, Bernard
Rue des Cerisiers 7
CH-2023 Gorgier(CH)**

(74) Mandataire: **Rochat, Daniel Jean et al
Bovard SA Ingénieurs-Conseils ACP Optingenstrasse 16
CH-3000 Bern 25(CH)**

# Description

L'invention a pour objet une installation pour l'alimentation en tabac d'une ou plusieurs machines à fabriquer notamment des cigarettes, comportant d'un côté un bac d'alimentation contenant du tabac non exempt de poussières résiduelles, de l'autre côté une écluse opérant la séparation des poussières et du tabac et déversant celui-ci dans la machine à fabriquer des cigarettes correspondante, ainsi qu'un conduit de laison par l'intermédiaire duquel le tabac et les poussières qui y sont mélangés sont véhiculés par aspiration du bac vers l'écluse.

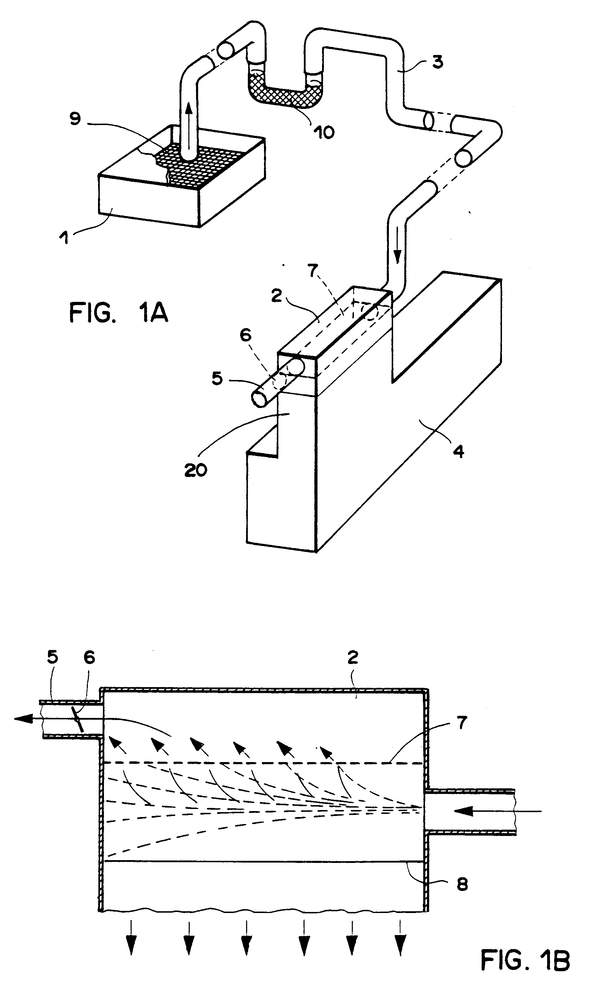

Les installations connues mises en oeuvre pour alimenter en tabac les machines à fabriquer des cigarettes fonctionnent en régle générale selon des cycles séquentiels. Le schéma de principe de ces installations est reproduit dans les fig. 1a et 1b. Elles comportent un bac d'alimentation 1, une écluse 2, ces deux éléments étant reliés par un conduit 3. L'écluse est de plus reliée par un conduit 5 à une turbine non représentée, produisant l'aspiration, un clapet 6 permettant de régler celle-ci. Elle est pourvue enfin d'une trappe 8.

Le cycle de fonctionnement est le suivant :
dans un premier temps, l'écluse étant vide, le clapet 6 ouvert et la trappe 8 fermée, l'aspiration provoquée par la turbine entraîne le tabac ainsi que les poussières résiduelles qui y sont mélangées dans le conduit 3 puis à l'intérieur de l'écluse à une vitesse d'environ 22 m/s. Le tabac reste plaqué contre une treillis 7, tandis que l'air et les poussières qui en sont extrates circulent à travers celui-ci et sont évacués par le conduit 5. Dans un second temps, une quantité déterminée de tabac se trouvant dans l'écluse, l'aspiration est coupée par la fermeture du clapet 6. Simultenément, la trappe 8 est ouverte, de telle sorte que le tabac tombe d'un seul bloc dans un réservoir de la machine à fabriquer les cigarettes 4. Le niveau de tabac dans le réservoir 20 descendra progressivement selon le régime de production de la machine jusqu'à atteindre un niveau miminal. A ce moment, un appel en tabac est déclenché et le cycle d'aspiration d'une nouvelle quantité Q recommence.

Le problème essentiel auquel on est confronté avec les installations connues réside dans les pertes et la dégradation d'une importante quantité de tabac -3% environ - lors de la phase d'acheminement du bac d'alimentation au réservoir de la machine. Le mode de fonctionnement est en effet trop "brutal" pour des particules de tabac expansées qui sont fragiles: d'une part, lors du cycle d'aspiration, les particules de tabac restent soumises, dans l'écluse, aux forces d'aspiration qui plaquent celles-ci les unes contre les autres, ce qui provoque des cassures des dites particules; d'autre part, lorsque le clapet 6 est fermé et pendant toute l'interruption de l'aspiration, du tabac 10 (fig. 1a) reste dans le conduit. Lors du redémarrage du cycle à l'ouverture du clapet, ces particules sont soumises à une accélération très brusque, leur vitesse passant quasi instantanément de 0 à 22 m/s. A l'inverse, lors de l'arrêt du cycle, toutes les particules se trouvant dans le conduit sont brusquement freinées, leur vitesse passant alors de 22 m/s à 0 m/s. Les particules de tabac expansé sont soumises à des turbulences et des forces de frottement importantes, ce qui entraîne également des cassures d'un grand nombre de particules et la formation de "poussières" de tabac qui sont alors évacuées avec l'air.

Un dispositif connu illustrant cet état de la technique est représenté à la figure 4 du document GB-2,139,870. L'aspiration du tabac dans la conduite 6 est commandée par les détecteurs 43, 44, 46 disposés sur le réservoir 4 disposé après le dispositif séparateur 1. Dans ce dispositif, les détecteurs fonctionnant de manière intermittente, l'aspiration du tabac sera aussi intermittente ou séquentielle provoquant les sollicitations évoquées plus haut sur les particules de tabac lors des brusques accélérations ou décélérations causées par la succession des cycles d'aspiration.

L'invention permet d'éviter les inconvénients mentionnés des installations de l'art antérieur en proposant une installation comportant les caractéristiques de la revendication 1 permettant ainsi d'assurer un fonctionnement continu de l'installation, la quantité de tabac aspirée étant adaptée au régime de production.

L'installation est encore caractérisée en ce que l'écluse sur laquelle débouche l'autre partie extrême du conduit est une écluse tangentielle. A l'inverse de l'écluse à clapet usuelle, celle-ci permet une séparation tabac/air sans freinage brusque. la vitesse initiale est perdue progressivement. Les frictions et les plaquages des particules de tabac sont évités, ce qui contribue avec le dispositif de réglage du débit du tabac à réduire d'avantage encore les dégradatios du tabac et à améliorer le rendement ainsi que la qualité du produit fini.

Ainsi, le fonctionnement du dispositif est véritablement continu. Le dispositif de réglage, concentré dans un bloc compact et simple, apporte une solution particulièrement élégante et ingénieuse, basée sur l'idée de faire intervenir, pour la régulation de la quantité de tabac, la variation d'un paramétre à la source, et non pas en aval, paramètre qu'on appellera H. De plus, le dispositif présente l'avantage que les variations de hauteur absolue de tabac dans le bac d'alimentation n'ont aucune influence sur la bonne continuité de l'installation.

Les avantages et autres caractéristiques de l'installation selon l'invention ressortiront de la description qui va en être faite et pour la lecture de laquelle on se référera au dessin annexé, dans lequel :

la fig. 2 représente le schéma de fonctionnement de l'installation selon l'invention,

la fig. 2A est une vue de gauche développée du diaphragme de l'écluse tangentielle,

la fig. 3 est un graphe donnant l'allure de la quantité de tabac aspiré en fonction de la hauteur H,

la fig. 4 est un schéma de principe de commande du dispositif de réglage de la quantité de tabac.

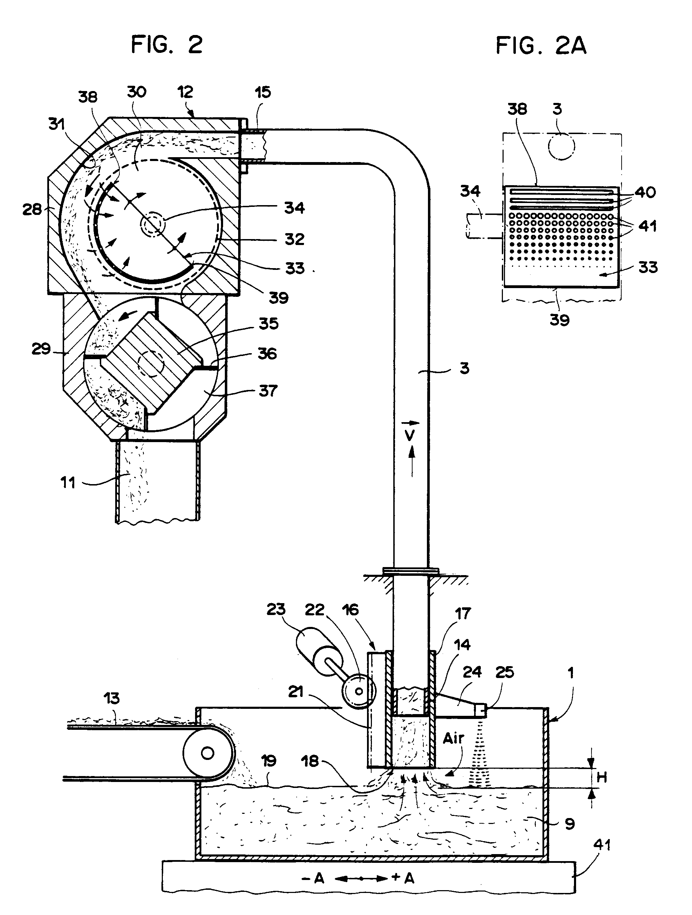

Dans la fig. 2, les moyens et éléments correspondant à ceux déjà rencontrés dans les fig. 1A et 1B, portent les mêmes références. On aperçoit le bac d'alimentation 1 contenant du tabac 9 enfermant encore des poussières résiduelles, le conduit fixe 3, et à la place de l'écluse à clapet une écluse tangentielle 12.

Le dispositif de réglage 16 du débit du tabac est agencé sur la partie extrême 14 du conduit 3 dont l'axe est de préférence perpendiculaire au plan formé par le niveau 19 du tabac 9. Il comporte un manchon mobile 17 pouvant coulisser le long de la partie extrême 14, de telle sorte que le bord inférieur 18 du manchon 17 se trouve à une hauteur H variable du niveau 19. Les moyens de coulissement et de guidage des manchons sur l'extrémité 14 - d'ailleurs non représentés - sont connus en soi et ne font donc pas l'objet de plus amples descriptions.

Le tabac 9 est déversé dans le bac 1, par exemple au moyen d'une bande transporteuse 13, ou encore d'une trémie. Le niveau 19 reste toujours quasiment horizontal, le bac d'alimentation étant solidaire d'un vibreur imprimant au dit bac un mouvement alterné horizontal de courte amplitude -A, +A. Ce dispositif de vibration est également connu et n'est représenté que schématiquement sur la fig. 2; il porte la référence 10.

Le manchon 17 est équipé lui-même d'une crémaillère 21 en prise avec un pignon 22 actionné par un moteur 23. A l'opposé du dispositif d'actionnement 21, 22, 23, est vissé ou soudé un bras 24 au bout duquel est fixé un détecteur 25, par exemple un capteur à ultra-sons ou optique, (notamment infra-rouge). Bien entendu, l'actionnement du manchon 17 peut être obtenu par tous autres moyens que ceux évoqués; ainsi on peut prévoir un dispositif constitué d'éléments pneumatiques ou encore hydrauliques.

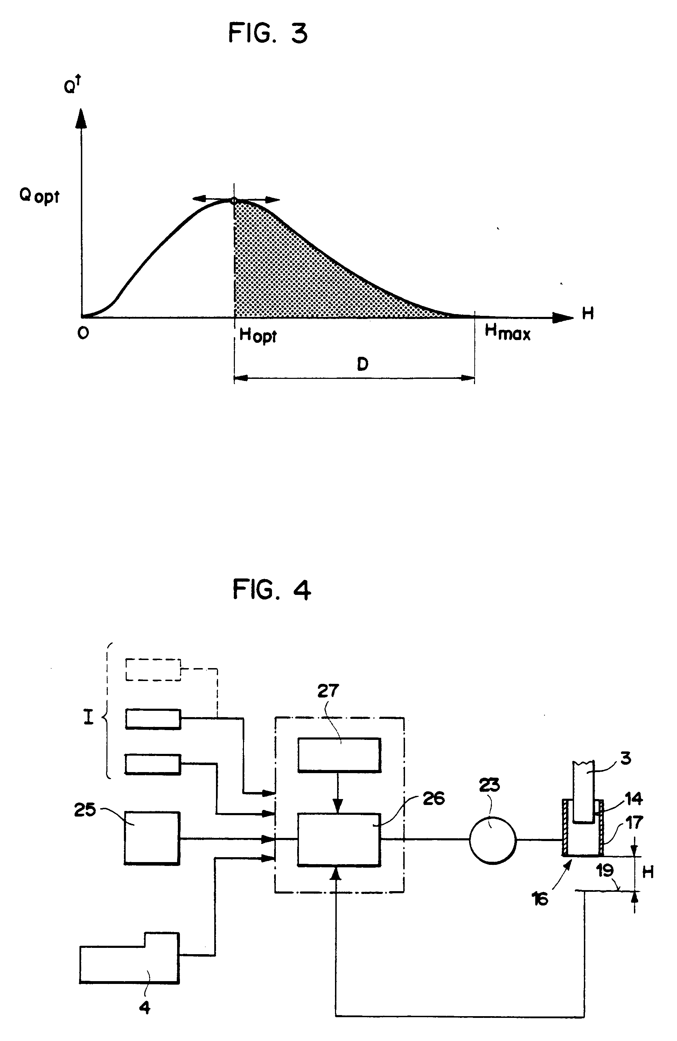

Le capteur comme on l'aperçoit à la fig. 4 est avantageusement en liaison avec une unité de commande 26 elle-même reliée à un programmateur 27. L'unité 26 commande le moteur 23, de telle sorte que le dispositif de réglage 16 soit actionné afin de positionner le manchon 17 à une valeur H voulue. La commande s'effectuera selon un programme qui tient compte des données d'entrée E notamment, outre celles livrées par le détecteur, les données relatives au régime de production de la machine à alimenter en tabac, les caractères qualitatifs des particules et la quantité de celles-ci se trouvant dans le bac 1, la position du clapet de régulation 6 à la sortie de l'écluse, la vitesse d'aspiration de l'air etc.

Le fonctionnement est aisé à comprendre : lorsque l'aspiration est enclenchée, l'air entraîne les particules de tabac qui sont véhiculées avec lui dans le conduit 3. Le tabac 11 libéré des poussières résiduelles est déversé dans le réservoir de la machine selon un processus sur lequel on reviendra plus loin. Le dispositif 16 va permettre d'adapter très exactement la quantité de tabac 11 à celle qui est effectivement requise, compte tenu du régime de production, respectivement des arrêts de la machine à fabriquer des cigarettes. En effet, la quantité de tabac aspiré sera fonction de la hauteur H, c.à.d. de la dépression créée. Le graphe de cette fonction est représenté en fig. 3. On aperçoit que la courbe "Quantité = f (H)" présente l'allure d'une courbe de Gauss légèrement à gauche. Pour une valeur théorique H = O, la quantité de tabac aspiré sera nulle. En augmentant la valeur de H, la quantité de tabac aspiré va elle aussi croître jusqu'à atteindre une valeur maximum correspondant à une valeur optimale de H; ces valeurs sont symbolisées sur la fig. 3 respectivement par $Q_{opt}$ et par $H_{opt}$. Si l'on continue d'augmenter la valeur de H en faisant coulisser le manchon 17 vers le haut, la quantité de tabac aspiré va décroître, la dépression au niveau 19 allant en diminuant. La quantité de tabac va tendre progressivement vers O au fur et à mesure que l'on tend vers une valeur H symbolisée sur la fig. 3 par $H_{max}$. A tout instant, l'unité de commande 26, 27, saisit les différentes données quantitatives et qualitatives E dont il est fait mention plus haut (vitesse de l'air, humidité du tabac, poids spécifique de celui-ci, etc.) et tirera de ces paramètres sur la base d'un algorithme programmé la valeur idéale de H pour aspirer la quantité juste nécessaire. Les moyens d'actionnement du manchon seront donc mis en oeuvre par l'unité de commande dès qu'une correction de la valeur actuelle de H s'avèrera nécessaire. Il est avantageux de choisir comme domaine opérationnel D du dispositif 16 celui correspondant à l'intervalle $H_{opt}$ et $H_{max}$.

Afin d'exploiter pleinement les avantages procurés par le dispositif de réglage 16 décrit, une autre caractéristique de l'invention consiste à réaliser une combinaison nouvelle en prévoyant à l'autre partie extrême 15 du conduit 3 une écluse tangentielle 12 représentée uniquement en coupe transversale sur la fig. 2. A l'inverse de l'écluse 2 comportant la trappe 8, l'écluse de type tangentiel permet d'effectuer l'opération de séparation tabac/air sans freinage brusque, ce tabac ne perdant sa vitesse initiale que progressivement.

L'écluse 12 est constituée d'un élément supérieur 28 et d'un élément inférieur 29. L'élément supérieur comporte un conduit dont une portion est circulaire et dont la paroi extérieure 31 est extrêmement lisse afin que les particules de tabac qui "glissent" le long de ce conduit, ne soient pas brisées par les aspérités, un treillis cylindrique rotatif 32 et un diaphragme fixe 33 permettant de régler la dépression; il comporte en outre un conduit d'évacuation axial de l'air 34 (correspondant au conduit 5 de la fig. 1B) ainsi qu'un clapet non représenté (correspondant au clapet 6 de la fig. 1B) permettant d'optimiser la quantité et la vitesse de l'air aspiré. La fig. 2A représente une vue de gauche développée, de la fig. 2, du diaphragme 33. Constitué en tôle, il présente, dans une exécution préférée, la forme d'un tambour demi-cylindrique dont les arêtes de base sont désignées par 38 et 39 et dont l'axe se superpose à celui du treillis 32. Le diaphragme, pivotable autour du dit axe, est fixé dans une position déterminée qui sera fonction, comme on le comprendra plus loin, de différents paramètres, notamment de la vitesse $\vec{V}$ d'aspiration et donc de la force d'aspiration, du poids spécifique du tabac, du taux d'humidité de celui-ci. Dans la fig. 2, la position du diaphragme est telle, que le prolongement de sa base 38, 39, forme avec l'axe de l'entrée du conduit 3 un angle de 45° approximativement. La partie cylindrique du diaphragme 33 est pourvue de plusieurs rangées d'ouvertures 40, 41, à travers lesquels circulent l'air et les poussières aspirés par le conduit 34. Comme on peut l'apercevoir sur la fig. 2a, les ouvertures 40 sont en forme de fentes rectangulaires, tandis que les ouvertures 41 présentent la forme d'orifices circulaires. On remarque que la section d'ouverture des rangées va décroissant en allant du bord supérieur 38 vers le abord inférieur 39. Ainsi, dans l'exemple décrit, la section d'ouverture de la première rangée 40, c.à.d. la première fente rectangulaire est d'environ 80 cm², la section totale des orifices circulaires de la dernière rangée 41 est d'environ 10 cm². L'élément inférieur 29 comporte une cage à évidement cylindrique, un arbre rotatif 35 à section carrée muni de pelles 36, lesquelles forment dans l'exemple décrit quatre compartiments 37. L'ensemble 35,36 est entraîné en rotation dans l'évidement dans le sens trigonométrique au moyen d'un moteur-réducteur non représenté. Ce même moteur entraîne également en rotation le treillis cylindrique 32, grâce à un dispositif de transmission également non représenté. L'arbre 38 peut tourner à la même vitesse de rotation que le treillis 32, ou à une vitesse différente, de préférence inférieure.

Lorsque l'installation d'alimentation est en action, le tabac pénètre dans l'écluse 12 avec la vitesse de fonctionnement $\vec{V}$. Afin d'éviter les brisures de particules de tabac, il est impératif alors que celles-ci ne soient soumises à aucune sollicitation brutale, mais qu'elles glissent quasiment sans frottement le long de la paroi 31. Cet impératif explique le positionnement du diaphragme 33 et la conformation des ouvertures 40, 41 appliquées dans celui-ci:

Dans un premier temps, l'inertie initiale des particules de tabac, et corrélativement la force centrifuge, qui comprend en plus une composante engendrée par la rotation de la grille 32, est relativement grande; cette force centrifuge tend à plaquer lesdites particules contre la paroi 31. Puis cette inertie va rapidement diminuer, et avec elle la force centrifuge. Cette force centrifuge décroissante va être compensée par une force centripète correspondante grâce aux particularités déjà évoquées que présente le diaphragme 33. Cet équilibre aura pour effet une perte progressive de la vitesse des particules. La séparation particules de tabac/air + poussières, est ainsi assurée de manière optimale.

L'élément inférieur 29 remplit, par la suite, la fonction de séparateur atmosphérique. En effet, grâce au compartiment 37, le tabac 11, exempt de toute poussière, et qui est déversé de façon continue dans le réservoir de la machine à fabriquer les cigarettes, les turbulences que pourraient provoquer la pression atmosphérique sont écartées.

Ainsi l'installation selon l'invention remplit-elle au mieux les objectifs visés. La machine à fabriquer les cigarettes est continuellement alimentée en particules de tabac selon son régime de production. De plus, grâce au dispositif de réglage de la quantité de tabac 16 décrit, la purge s'effectue automatiquement, ce qui constitue un effet de la plus grande importance : si l'unité de commande 26 reçoit l'information selon laquelle il y a trop de tabac, par exemple parce que la machine est arrêtée, le manchon 17 est remonté de manière à atteindre la hauteur $H_{max}$. L'aspiration de tabac nouveau à partir du bac d'alimentation 1 est supprimée, et celui que se trouve dans le conduit 3 continuera encore à être véhiculé, le clapet de régulation (portant la réf. 6 dans la fig. 1b) restant ouvert pendant quelques secondes encore. Puis le clapet sera fermé une fois la purge effectuée. Les particules de tabac lors de cette opération n'ont été soumises à aucu choc résultant de la brusque décélération, resp. accélération. Enfin, le fonctionnement continu permet de véhiculer les particules de tabac à une vitesse de l'ordre de 1 à 15 m/s., soit à une vitesse bien inférieure à celle requise dans les installations connues.

Alors que les dégradations dans les installations usuelles sont d'env. 3%, celles-ci sont dans l'installation décrite, réduites à moins de 1%, ce qui représente, compte tenu du coût de la matière première, c.à.d. des particules de tabac, et de la quantité de celles-ci, qui est conditionée, une économie considérable.

## Revendications

1. Installation pour l'alimentation en tabac d'une ou plusieurs machines à fabriquer notamment des cigarettes, comportant d'un côté un bac d'alimentation (1) contenant du tabac (9) non exempt de poussières résiduelles, de l'autre côté une écluse (12) opérant la séparation des poussières et du tabac en déversant celui-ci dans la machine à fabriquer des cigarettes correspondante, ainsi qu'un conduit de liaison (3) par l'intermédiaire duquel le tabac et les poussières qui y sont mélangés sont véhiculés par aspiration du bac vers l'écluse, la partie extrême (14) du conduit, qui coopère avec le bac d'alimentation étant équipée d'un moyen de commande (16) constitué d'un manchon mobile (17) pouvant être actionné par des moyens (21, 22, 23) permettant son coulissement sur ladite partie dans les deux sens de l'axe de celle-ci, le bord inférieur (18) du manchon se trouvant ainsi à une distance H variable du niveau (19) du tabac contenu dans le bac pour faire varier le débit de tabac qui pénètre dans le conduit, ledit moyen de commande coopérant avec un détecteur (25) par l'intermédiaire d'un programmateur (27), caractérisée en ce qu'il y a un seul détecteur associé au bac et fournissant en continu la valeur de H et en ce que le débit Q ou la distance H est réglée par variation de la distance H sur la base d'une fonction continue donnée Q = f(H) rentrée dans le programmateur.

2. Installation selon la revendication 1, caractérisée en ce que les moyens actionnant le manchon mobile sont constitués d'une crémaillère (21) et d'un pignon (22) en prise avec un moteur (23).

3. Installation selon la revendication 1, caractérisée en ce que les moyens actionnant le manchon mobile sont constitués d'éléments pneumatiques.

4. Installation selon l'une des revendications précédentes, caractérisée en ce que le détecteur est un capteur à ultra-sons ou optique.

5. Installation selon l'une des revendications précédentes, caractérisée en ce que l'écluse sur laquelle débouche l'autre partie extrême (15) du conduit de liaison est une écluse tangentielle (12).

## Claims

1. Equipment for feeding tobacco to one or more manufacturing machines, particularly for cigarette manufacturing machines, comprising on one side a feed receptacle (1) containing tobacco (9) not free of residual dust, on the other side a separator (12) separating the dust and the tobacco by discharging the latter into the corresponding cigarette manufacturing machine, as well as a link duct (3) by means of which the tobacco and the dust mixed up therein are transported by suction from the receptacle towards the separator, the end portion (14) of the duct which communicates with the feed receptacle being equipped with control means (16) comprising a mobile sleeve (17) which may be actuated by means (21, 22, 23) allowing it to slide over said portion in the two directions of the axis of the portion, the lower rim (18) of the sleeve thus being situated at a variable distance H from the level (19) of the tobacco contained in the receptacle, to vary the rate of tobacco entering the duct, said control means cooperating with a detector (25) via a programmer (27), characterized in that there is a single detector associated with the receptacle and continuously supplying the value of H, and in that the rate Q or the distance H is regulated by varying the distance H on the basis of a given continuous function Q = f(H) entered in the programmer.

2. The equipment of claim 1, characterized in that the means for actuating the mobile sleeve comprise a rack (21) and pinion (22) engaging with a motor (23).

3. The equipment of claim 1, characterized in that the means for actuating the mobile sleeve comprise pneumatic elements.

4. The equipment of one of the preceding claims, characterized in that the detector is an ultrasonic or optical sensor.

5. The equipment of one of the preceding claims, characterized in that the separator over which ends the other end portion (15) of the link duct is a tangential separator (12).

## Patentansprüche

1. Anlage zum Zuführen von Tabak zu einer oder mehreren Maschinen zur Herstellung insbesondere von Zigaretten, welche einerseits einen Versorgungstrog (1) aufweist, welcher Tabak (9) enthält, der nicht frei von Staubrückständen ist, und andererseits eine Schleuse (12) aufweist, welche die Separierung des Staubes vom Tabak bewirkt, währenddem der Tabak in die entsprechende Maschine zur Herstellung von Zigaretten übergeführt wird, sowie einen Verbindungskanal (3), durch dessen Zwischenteil der Tabak und der Staub, der damit vermischt ist, durch Saugung vom Trog gegen die Schleuse transportierbar sind, wobei der Endbereich (14) des Kanals, der mit dem Versorgungstrog zusammenwirkt, mit einem Steuerungsmittel (16) ausgerüstet ist, bestehend aus einer bewegbaren Muffe (17), welche durch Mittel (21, 22, 23) derart betätigbar ist, dass eine Verschiebung auf dem genannten Bereich in den zwei Achsrichtungen des Kanals erfolgen kann, so dass sich die Unterkante (18) der Muffe so mit einem variablen Abstand H vom Niveau (19) des Tabaks, der im Trog enthalten ist, einstellen lässt, dass die Menge des Tabaks, die in den Kanal eindringt, variierbar ist, wobei die genannten Steuerungsmittel mit einem Detektor (25) durch einen zwischengeschalteten Rechner (27) zusammenwirken, dadurch gekennzeichnet, dass ein einziger Detektor im Trog angeordnet ist, welcher fortlaufend den Wert H liefert und dass die Menge Q oder der Abstand H durch Veränderung des Abstandes H aufgrund einer fortlaufend gegebenen Funktion $Q = f(H)$, die im Rechner enthalten ist, regelbar ist.

2. Anlage nach Anspruch 1, dadurch gekennzeichnet, dass die Mittel zur Betätigung der bewegbaren Muffe aus einer Zahnstange (21) und aus einem darin eingreifenden Zahnritzel (22) mit einem Motor (23) bestehen.

3. Anlage nach Anspruch 1, dadurch gekennzeichnet, dass die Mittel zur Betätigung der bewegbaren Muffe aus pneumatischen Elementen bestehen.

4. Anlage nach einem der vorhergehenden Ansprüche, dadurch gekennzeichnet, dass der Detektor ein Ultraschall-Sensor oder ein optischer Sensor ist.

5. Anlage nach einem der vorhergehenden Ansprüche, dadurch gekennzeichnet, dass die Schleuse, in welche der andere Endbereich (15) des Verbindungskanals einmündet, eine Tangentialschleuse (12) ist.

FIG. 1A

FIG. 1B

7

# FIG. 2

# FIG. 2A

## FIG. 3

## FIG. 4